Europäisches Patentamt

European Patent Office

Office européen des brevets

(19)

(11) Numéro de publication : **0 043 321**
**B1**

(12) **FASCICULE DE BREVET EUROPÉEN**

(45) Date de publication du fascicule du brevet :
28.12.83

(51) Int. Cl.³ : **B 65 G 67/62**

(21) Numéro de dépôt : 81401029.4

(22) Date de dépôt : **26.06.81**

(54) **Appareil de déchargement de matières en vrac.**

(30) Priorité : 26.06.80 FR 8014196

(43) Date de publication de la demande :
06.01.82 Bulletin 82/01

(45) Mention de la délivrance du brevet :
28.12.83 Bulletin 83/52

(84) Etats contractants désignés :
**DE FR GB**

(56) Documents cités :
**DE-A- 2 716 014**
**FR-A- 493 981**
**US-A- 1 441 249**

(73) Titulaire : **Delattre-Levivier**
**16 boulevard Malesherbes**
**F-75008 Paris (FR)**

(72) Inventeur : **Riboulet, Jacques**
**32 Avenue des Mésanges**
**F-94360 Bry-sur-Marne (FR)**

(74) Mandataire : **Saint-Martin, René et al**
**CREUSOT-LOIRE 15 rue Pasquier**
**F-75383 Paris Cedex 08 (FR)**

Jouve, 18, rue St-Denis, 75001 Paris, France

## Appareil de déchargement de matières en vrac

La présente invention concerne un appareil de déchargement de matières en vrac, destiné par exemple au déchargement continu de navires, et comportant un élévateur continu porté à l'extrémité d'une flèche. L'invention concerne plus particulièrement le transfert des matières entre l'élévateur et le transporteur porté par la flèche.

Les appareils de ce type pour le déchargement en continu de navires de transport de matières en vrac, comme par exemple des minerais ou autres matériaux granuleux ou pulvérulents, sont généralement constitués par un portique roulant sur le quai et porteur d'une flèche orientable qui, à son extrémité, supporte un élévateur vertical à godets. Lorsque la base de l'élévateur à godets est introduite dans la cale du navire, les matières sont d'abord remontées par l'élévateur puis, par une succession de trémies et de transporteurs continus, sont amenées dans l'axe du portique où elles sont finalement déversées sur un transporteur vers leur utilisation ou vers un stockage. Pour effectuer le transfert des matières à partir d'un élévateur non orientable on peut utiliser, comme dans le brevet US 1 441 249, des déflecteurs en toit qui reçoivent les matières et les répartissent sur deux transporteurs continus.

Pour balayer avec le maximum d'efficacité les cales du navire à décharger, on utilise généralement un élévateur vertical orientable mais il n'est pas possible de faire déverser directement les matières provenant de cet élévateur sur le transporteur porté par la flèche. Le transfert des matières entre l'élévateur et le transporteur est obtenu dans le brevet FR-A-2 217 250, par une trémie concentrique à l'axe vertical de l'élévateur orientable, grâce à laquelle les matières déversées en un point quelconque sont amenées audessus de la goulotte fixe d'alimentation dudit transporteur de flèche.

Usuellement cette trémie tournante est constituée par une sole annulaire tournant entre deux parois cylindriques fixes ; l'une des deux parois est interrompue au droit de la goulotte fixe de déchargement vers le transporteur, de telle sorte que les matières entraînées par la rotation tombent par gravité dans la goulotte lorsqu'elles arrivent en face du trou de la paroi. Une telle disposition présente des inconvénients particulièrement sensibles lorsqu'il s'agit de manipuler des matières fines, fragiles ou abrasives. En effet lorsque la sole tourne entre les deux parois cylindriques fixe il y a frottement continu des matières sur les parois latérales, et si les matières sont friables il peut y avoir fractionnement de celles-ci et apparition de fines plus difficiles à utiliser par la suite. En outre les mouvements relatifs de la sole par rapport aux parois latérales fixes imposent de prévoir un jeu de fonctionnement, d'où risque de colmatage par les fines, risque de perte de matières, et risque de blocage de l'installation.

Pour assurer le transfert des matières entre un élévateur rotatif et un transporteur continu, le brevet FR-A 493 981 prévoit une trémie comportant des plaques déflectrices qui canalisent les matières vers la sortie disposée au-dessus du transporteur.

L'appareil de déchargement de matières en vrac, tel que celui du brevet DE-A 2 716 014, comprend un élévateur vertical à godets qui est orientable autour d'un axe de pivotement vertical sur un châssis-support articulé à l'extrémité d'une flèche portée par un portique roulant et qui déverse lesdites matières par l'intermédiaire d'une jetée pourvue d'une sortie de déversement sur deux transporteurs continus auxiliaires, avant que les matières soient évacuées par au moins un transporteur continu d'évacuation porté par ladite flèche.

La présente invention a pour but de permettre le transfert des matières entre l'élévateur orientable et le transporteur d'évacuation quelle que soit l'orientation de l'élévateur. La conception de ce dispositif de transfert est simplifiée et son encombrement en hauteur est réduit.

L'invention est caractérisée par le fait que l'appareil comprend une trémie fixée au châssis-support et comportant, au-dessous de la sortie de déversement, deux plans qui forment, tout autour d'une ouverture de pivotement de l'élévateur, à partir de deux arêtes de crête situées de part et d'autre de ladite ouverture, deux surfaces d'écoulement divergentes vers le bas susceptibles de recevoir les matières déversées par la sortie sur la totalité du mouvement circulaire de cette sortie.

Selon une caractéristique de l'invention, la trémie comporte au-dessus des plans d'écoulement une entrée annulaire dans laquelle se déversent les matières sortant de la sortie de déversement associé à l'élévateur.

Selon une autre caractéristique, chaque transporteur recevant la matière d'un plan d'écoulement a une pente ascendante selon le sens d'écoulement des matières.

L'invention sera mieux comprise en se référant à un mode de réalisation particulier donné à titre d'exemple et représenté par les dessins annexés.

La figure 1 montre l'ensemble d'un équipement de déchargement continu de navire réalisé selon l'invention.

La figure 2 représente à plus grande échelle, en élévation latérale avec des coupes partielles, la zone de transfert entre l'élévateur et le transporteur de flèche.

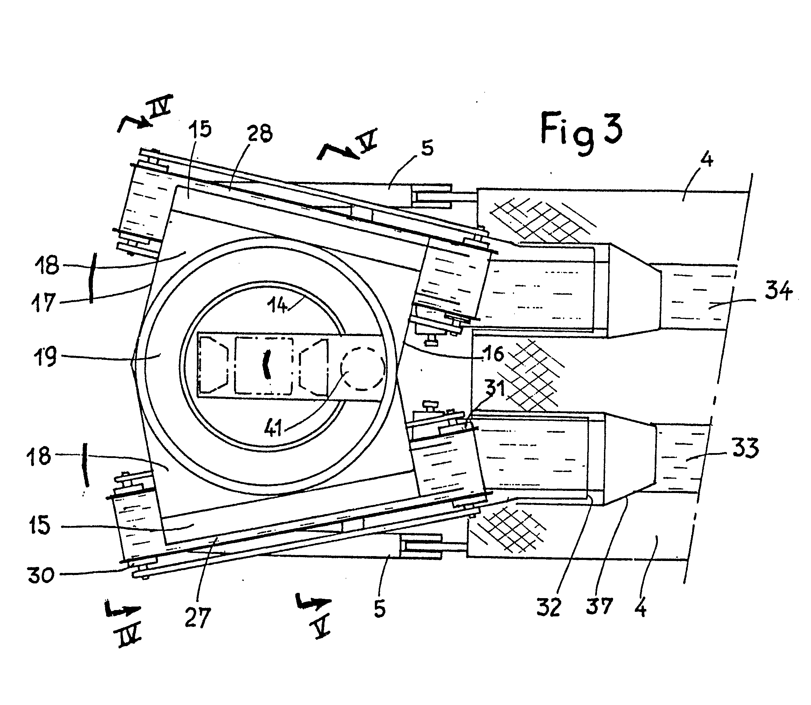

La figure 3 est une vue de dessus simplifiée de la même zone.

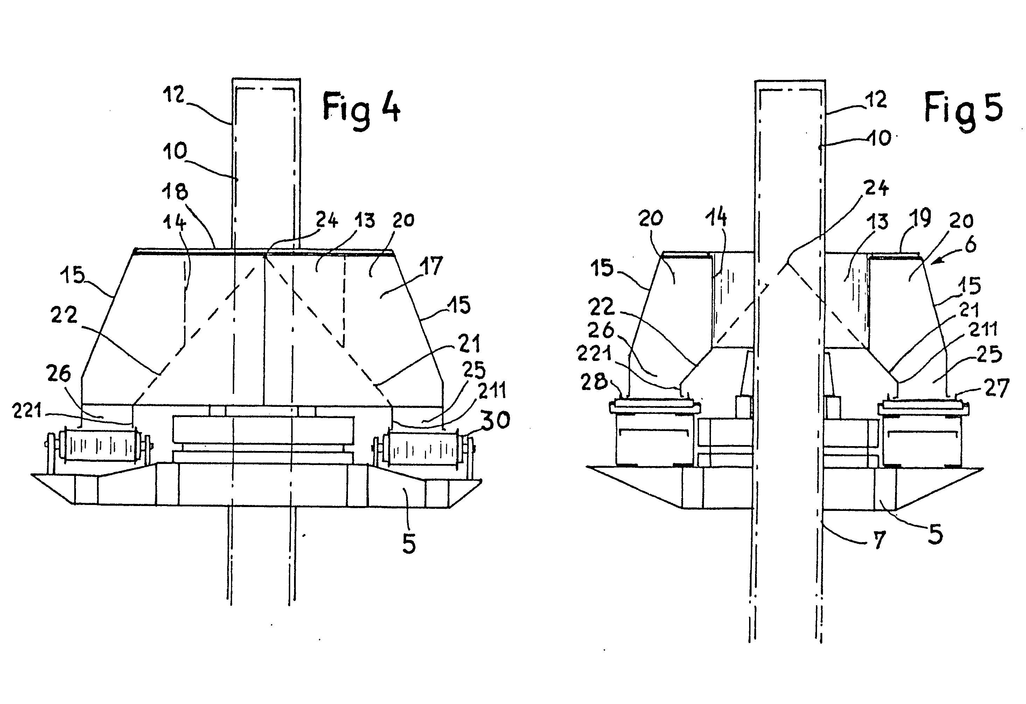

La figure 4 est une vue selon IV-IV de la figure 3.

La figure 5 est une coupe selon V-V de la figure 3.

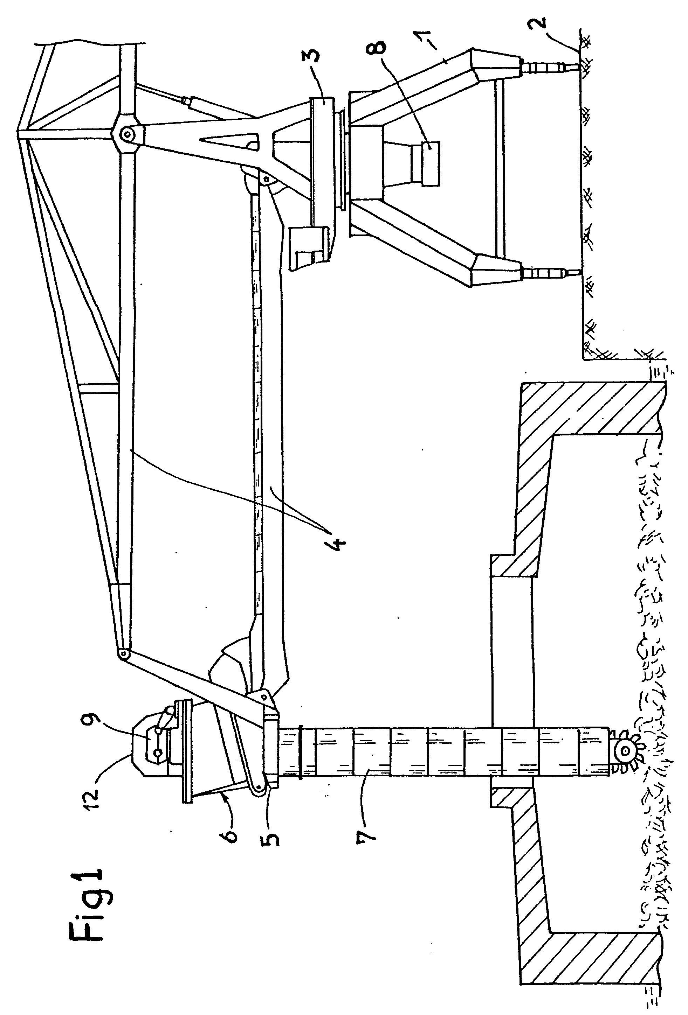

On retrouvera sur la figure 1 des éléments essentiels usuels d'un déchargeur continu porté par un portique 1 roulant sur le quai 2. Un bâti tournant 3 porte une flèche 4 en parallélogramme, permettant de conserver l'horizontalité d'un châssis 5 disposé à son extrémité, et ceci quelle que soit l'inclinaison de la flèche. Le châssis 5 supporte l'élévateur vertical à godets 7. De façon usuelle l'élévateur 7 est orientable par rapport au châssis 5 autour d'un axe de pivotement vertical. Les matières déversées à la partie supérieure de l'élévateur sont reprises par une trémie réceptrice 6 et des transporteurs continus jusque dans l'axe du portique 1, pour aboutir à une trémie de sortie 8. On n'a pas représenté ici l'évacuation des matières au-delà de la trémie 8, qui peut se faire de façon tout à fait usuelle par un transporteur fixe à quai, ou par l'intermédiaire d'un transporteur de renvoi latéral solidaire du portique lui-même.

On se référera maintenant à l'ensemble des autres figures de détail où l'on voit la partie supérieure de l'élévateur 7. La chaîne à godets 10 passe sur le tourteau supérieur de renvoi 11, protégé par le capotage supérieur 12. L'ensemble de l'élévateur 7 est porté par un support tournant sur un élément solidaire du châssis 5. Pour la simplification des dessins, on n'a pas représenté ici les organes moteurs permettant la mise en rotation de l'élévateur autour de son axe vertical. De même les organes moteurs de la chaîne à godets 10 ne sont représentés que sommairement en 9 sur la figure 1 et ont été volontairement omis sur les autres figures.

La trémie réceptrice 6 assurant le transfert des matières entre l'élévateur ceinture complètement l'élévateur orientable 7. Elle est fixe et solidaire du châssis 5. Elle comporte une virole cylindrique interne 14 coaxiale à l'axe du pivotement de l'élévateur qui constitue une ouverture 13 permettant le débattement en rotation dudit élévateur. Outre la virole interne 14, la trémie comporte une enceinte externe formée par deux faces latérales 15, deux panneaux avant et arrière en léger dièdre 16 et 17, une plaque de fermeture supérieure 18.

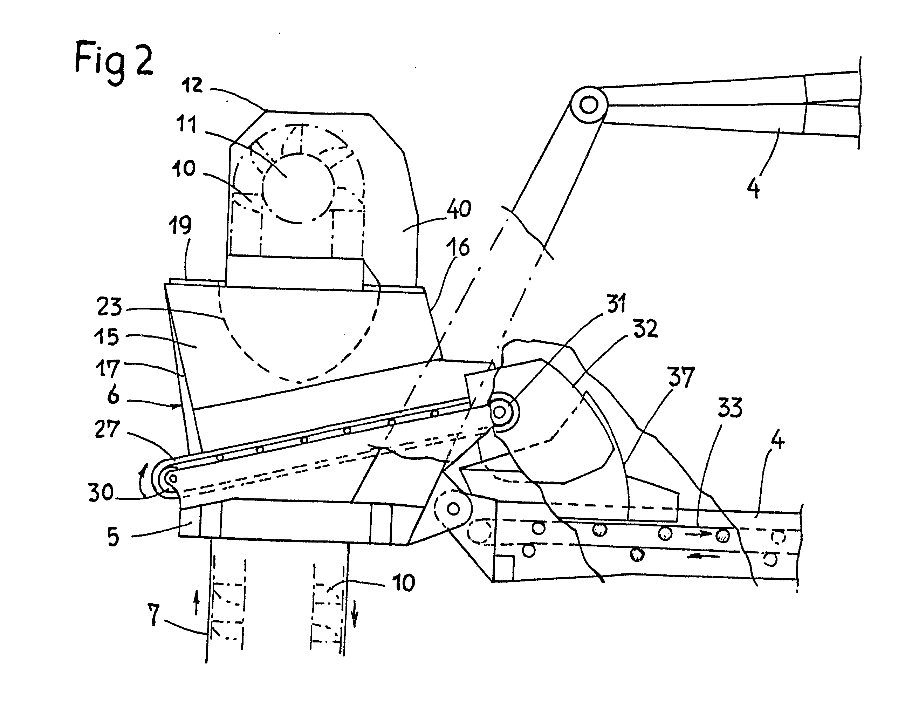

L'élévateur est équipé à la partie supérieure d'une jetée 40 dans laquelle les matières se déversent. Cette jetée liée en rotation à l'élévateur est pourvue d'une sortie de déversement 41 qui décrit un cercle centré sur l'axe de pivotement de l'élévateur. La sortie de la jetée passe dans un couvercle 19 fermant l'ouverture de la plaque de fermeture 18. Ce couvercle est lié en rotation à ladite jetée autour de l'axe de pivotement de l'élévateur. Les matières à la sortie de la jetée 40 tombent par gravité dans un orifice annulaire 20 ménagé entre la virole 14 et l'enceinte externe. Intérieurement, au-dessous de l'entrée, la trémie comporte deux plans 21-22 s'étendant tout autour de la virole 14. Ces deux plans inclinés sont symétriques par rapport à un plan vertical passant par l'axe de rotation de l'élévateur. Ils forment un toit marqué par deux arêtes de crête 24 horizontales situées de part et d'autre de la virole 14. Ces deux plans forment deux surfaces d'écoulement divergentes vers le bas qui sont susceptibles de recevoir les matières déversées à la sortie de la jetée 40 sur la totalité du mouvement circulaire de cette sortie. Chaque plan 21 ou 22 est limité par deux arêtes de crête 24, par les panneaux 16 et 17 et se raccorde à l'extérieur de la virole selon une ligne courbe représentée, pour le plan 21, en traits interrompus 23 sur la figure 2. Chaque plan est limité vers le bas par un bord rectiligne 211 ou 221 s'étendant en continu sur une longueur au moins égale à la distance entre les deux points de passage opposés de la sortie 41 au-dessus des arêtes 24. Chaque plan s'étend sans discontinuité.

Les deux plans inclinés délimitent ainsi deux demi-trémies symétriques fixes présentant à la partie inférieure chacune un orifice rectiligne de déversement 25 et 26 limité par le bord 211 ou 221 et une face latérale 15. Chacun de ces orifices déversoirs est disposé juste au-dessus de la courroie 27 ou 28 d'un transporteur auxiliaire continu. Chaque transporteur 27 est entraîné dans le sens de la flèche par des moyens classiques non représentés. Il est en pente ascendante selon le sens d'entraînement des matières depuis le tambour de pied 30 vers le tambour de tête 31. En vue de dessus les deux transporteurs 27, 28 convergent vers la flèche. Le transporteur 27 est prolongé par une jetée guide 32. On retrouvera une disposition tout à fait symétrique pour le transporteur 28.

La membrure inférieure de la flèche 4 supporte ici deux transporteurs continus d'évacuation à courroie de type tout à fait classique 33 et 34, qui se prolongent jusque dans l'axe du bâti tournant 3. Chaque transporteur 33 ou 34 est disposé de façon à recevoir les matières déversées respectivement par les transporteurs intermédiaires 27 ou 28. Pour permettre un guidage des matières entre les transporteurs 27 et 33 quelle que soit la position angulaire relative de la flèche 4 et du châssis 5, le transporteur 33 comporte un centrage 37 de forme conjuguée à celle de la jetée 32, pour l'envelopper et assurer l'étanchéité en toute position entre les positions maximales — haute et basse — de la flèche. Ici encore on retrouvera une disposition tout à fait symétrique pour le déversement entre le transporteur 28 et le transporteur 34.

Lorsqu'un godet de la chaîne 10 se vide, en basculant sur le tourteau supérieur 11, les matières déversées tombent dans la jetée 40 qui est solidaire du couvercle tournant 19. La chute des matières dans la trémie réceptrice se fait donc toujours par le même orifice 41, le couvercle 19 suivant la charpente et le capotage de l'élévateur dans toutes les positions angulaires variables.

Quelle que soit la position angulaire de l'élévateur, on voit que les matières tomberont sur l'un ou l'autre des plans inclinés 21 ou 22, ou même à cheval sur l'une ou l'autre des arêtes de crête, de telle sorte que toutes les matières se retrouveront finalement sur l'un ou l'autre des transporteurs auxiliaires 27 ou 28, puis sur l'un ou l'autre des transporteurs d'évacuation de flèches 33 ou 34. Bien entendu chaque transporteur 27, 28, 33 ou 34 est déterminé de façon à pouvoir absorber le débit maximum prévu pour l'installation.

Une telle réalisation permet donc, avec le même résultat final de permettre la réception des matières quelle que soit l'orientation de travail de l'élévateur, une construction plus simple et moins onéreuse, où les deux demi-trémies fixes remplacent une trémie tournante beaucoup plus complexe. En outre la remontée des matières par les transporteurs intermédiaires 27 et 28 avant leur déversement sur les transporteurs de flèches, permet un encombrement global en hauteur du même ordre de grandeur que pour les systèmes à trémies tournantes qui assurent un transport horizontal des matières entre leur réception et leur déversement.

Bien entendu l'invention n'est pas strictement limitée au mode de réalisation qui a été décrit à titre d'exemple, mais elle couvre également les réalisations qui n'en différeraient que par des détails, par des variantes d'exécution ou par l'utilisation de moyens équivalents. On pourrait ainsi concevoir une variante dans laquelle les deux transporteurs intermédiaires viendraient déverser dans une trémie fixe intermédiaire commune alimentant un seul transporteur d'évacuation porté par la flèche.

**Revendications**

1. Appareil de déchargement de matières en vrac comportant un élévateur vertical (7) à godets qui est orientable, autour d'un axe de pivotement vertical, sur un châssis-support (5) articulé à l'extrémité d'une flèche (4) portée par un portique roulant (1) et qui déverse, par l'intermédiaire d'une sortie de déversement (41) d'une jetée (40), les matières qui sont reçues par deux transporteurs continus auxiliaires (27, 28) avant d'être évacuées par au moins un transporteur continu (33, 34) d'évacuation porté par ladite flèche, caractérisé par le fait qu'il comporte une trémie (6) fixée audit châssis-support (5) et comportant, au-dessous de ladite sortie de déversement (41), deux plans (21, 22) qui forment, tout autour d'une ouverture (13) de pivotement de l'élévateur (7), à partir de deux arêtes de crête (24) situées de part et d'autre de ladite ouverture, deux surfaces d'écoulement divergentes vers le bas susceptibles de recevoir les matières déversées par la sortie (41) sur la totalité du mouvement circulaire de cette sortie.

2. Appareil selon la revendication 1, caractérisé par le fait que la trémie comporte, au-dessus des plans d'écoulement (21, 22) une entrée annulaire (20) dans laquelle se déversent les matières sortant de la sortie de déversement (41) associée à l'élévateur (7).

3. Appareil selon la revendication 1 ou 2 caractérisé par le fait que la trémie (6) comporte une enceinte externe comprenant deux faces latérales (15) formant avec les plans d'écoulement (21, 22) deux orifices rectilignes de déversement (25, 26) disposés au-dessus des transporteurs continus auxiliaires (27, 28) et deux panneaux avant et arrière (16, 17).

4. Appareil selon la revendication 1 ou 2 ou 3, caractérisé par le fait que la trémie (6) comporte une virole (14) qui constitue l'ouverture (13) permettant le pivotement de l'élévateur (7) et tout autour de laquelle s'étendent les deux plans inclinés (21, 22).

5. Appareil selon la revendication 1 ou 2, caractérisé par le fait que chaque transporteur continu auxiliaire (27, 28) recevant la matière d'une surface d'écoulement a une pente ascendante selon le sens d'entraînement des matières.

6. Appareil selon la revendication 2 ou 3 ou 4 caractérisé par le fait qu'il comporte un couvercle (19) fermant la trémie (6), ce couvercle étant lié en rotation à la jetée (40) de l'élévateur autour de l'axe de pivotement dudit élévateur.

7. Appareil selon la revendication 1, caractérisé par le fait que les deux transporteurs continus auxiliaires (27, 28) déversent sur une trémie fixe intermédiaire commune, déversant elle-même sur un transporteur unique d'évacuation.

**Claims**

1. Apparatus for unloading bulk materials, incorporating a vertical bucket elevator (7) which is rotatable about a vertical pivot axis on a supporting frame (5) articulated on the end of a jib (4) carried by a travelling gantry (1) and which, by means of a discharge outlet (41) of a pier (40) discharges the materials which are received by two auxiliary continuous conveyors (27, 28) before being removed by at least one continuous removal conveyor (33, 34) carried by the said jib, characterised in that it incorporates a hopper (6) fastened to the said supporting frame (5) and incorporating, underneath the said discharge outlet (41), two planes (21, 22) which form, all round a pivoting aperture (13) for the elevator (7), and starting from two ridge edges (24) located on either side of the said aperture, two flow surfaces which diverge downwards and which are capable of receiving the materials discharged via the outlet (41) over the entire circular movement of this outlet.

2. Apparatus according to Claim 1, characterised in that the hopper incorporates, above the flow planes (21, 22) an annular inlet (20) into which the materials coming from the discharge outlet (41) associated with the elevator (7) are discharged.

3. Apparatus according to Claim 1 or 2, characterised in that the hopper (6) incorporates an outer enclosure comprising two lateral faces (15) forming with the flow planes (21, 22) two rectilinear discharge orifices (25, 26) located above the auxiliary continuous conveyors (27, 28), and two front and rear panels (16, 17).

4. Apparatus according to Claim 1 or 2 or 3, characterised in that the hopper (6) incorporates a sleeve (14) which forms the aperture (13) allowing the elevator (7) to pivot and all round which the two inclined planes (21, 22) extend.

5. Apparatus according to Claim 1 or 2, characterised in that each auxiliary continuous conveyor (27, 28) receiving the material from a flow surface has a slope ascending in the direction of drive of the materials.

6. Apparatus according to Claim 2 or 3 or 4, characterised in that it incorporates a cover (19) closing the hopper (6), this cover being connected to the pier (40) of the elevator in rotation about the pivot axis of the said elevator.

7. Apparatus according to Claim 1, characterised in that the two auxiliary continuous conveyors (27, 28) discharge onto a common intermediate fixed hopper which itself discharges onto a single removal conveyor.

**Ansprüche**

1. Entladegerät für Schüttgut mit einem Senkrechtbecherwerk (7) das auf einem am Ende eines Auslegers (4), der von einem fahrbaren Portalrahmen (1) getragen wird, angelenkten Tragrahmen (5) um eine senkrechte Schwenkachse drehbar ist und über eine Schüttöffnung (41) einer Auswurfeinrichtung (40) das Gut ausschüttet, das von zwei Hilfsstetigförderer (27, 28) aufgenommen wird, bevor es durch mindestens einen von diesem Ausleger getragenen Abfuhrstetigförderer (33, 34) abgeführt wird, dadurch gekennzeichnet, daß es einen an diesem Tragrahmen (5) befestigten Trichter (6) umfaßt, der unterhalb dieser Schüttöffnung (41) zwei Ebenen (21, 22) aufweist, welche rings um eine Schwenköffnung (13) des Senkrechtbecherwerkes (7), von zwei an beiden Seiten dieser Öffnung gelegenen Scheitelkanten (24) ausgehend, zwei nach unten auseinanderlaufende Fließflächen bilden, die das von der Öffnung (41) ausgeschüttete Gut über die gesamte Kreisbewegung dieser Öffnung aufnehmen können.

2. Gerät nach Anspruch 1, dadurch gekennzeichnet, daß der Trichter über den Fließebenen (21, 22) einen kreisförmigen Einlauf (20) aufweist, in den das Gut geschüttet wird, das aus der mit dem Senkrechtbecherwerk (7) verbundenen Schüttöffnung (41) herauskommt.

3. Gerät nach Anspruch 1 oder 2, dadurch gekennzeichnet, daß der Trichter (6) einen Außenmantel aufweist mit zwei Seitenwänden (15), die mit den Fließebenen (21, 22) zwei geradlinige über den Hilfsstetigförderer (27, 28) angeordneten Schüttöffnungen (25, 26) bilden, und mit zwei Vorder- und Rückwänden (16, 17).

4. Gerät nach Anspruch 1 oder 2 oder 3, dadurch gekennzeichnet, daß zum Schwenken des Senkrechtbecherwerkes (7) der Trichter (6) einen die Öffnung (13) bildenden Ring (14) aufweist, wobei sich die beiden Neigungsebenen (21, 22) rings um diese erstrecken.

5. Gerät nach Anspruch 1 oder 2, dadurch gekennzeichnet, daß jeder von einer Fließfläche das Gut aufnehmenden Hilfsstetigförderer (27, 28) eine Steigung gemäß der Förderrichtung des Gutes aufweist.

6. Gerät nach Anspruch 2 oder 3 oder 4, dadurch gekennzeichnet, daß es einen den Trichter (6) schliessenden Deckel (19) aufweist, wobei dieser Deckel mit der Auswurfeinrichtung (40) des Senkrechtbecherwerkes um die Schwenkachse desselben drehfest verbunden ist.

7. Gerät nach Anspruch 1, dadurch gekennzeichnet, daß der Abwurf von den beiden Hilfsstetigförderer (27, 28) in einen gemeinsamen feststehenden Zwischentrichter erfolgt, der seinerseits auf einen einzigen Abfuhrförderer übergibt.

Fig 1

Fig 2

0 043 321

Fig 3

0 043 321

Fig 4

Fig 5

0 043 321